# EUROPÄISCHE PATENTSCHRIFT

(11) **EP 2 787 220 B1**
(45) Veröffentlichungstag und Bekanntmachung des Hinweises auf die Patenterteilung: **01.02.2017**
(21) Anmeldenummer: 14163344.6
(22) Anmeldetag: 03.04.2014
(51) Int. Cl.: F16B 12/24

(54) **Befestigungselement für den Möbelbau**
Fastening element for furniture manufacture
Élément de fixation pour la construction de meubles

(30) Priorität: 04.04.2013 DE 202013003073 U
(43) Veröffentlichungstag der Anmeldung: 08.10.2014
(73) Patentinhaber: Grass GmbH, 6973 Höchst (AT)
(72) Erfinder: Janzen, Jörg, 6890 Lustenau (AT)
(74) Vertreter: Otten, Roth, Dobler & Partner mbB Patentanwälte

(56) Entgegenhaltungen:
- DE-A1- 2 457 172
- DE-B3- 10 229 300
- FR-A1- 2 387 342
- US-B1- 6 322 305

## Beschreibung

### Stand der Technik

Befestigungselemente für den Möbelbau mit einem aufweitbaren Halteabschnitt sind bekannt (vgl. US 6,322,305 B1, DE 102 29 300 B3 oder FR 2 387 342 A1).

### Aufgabe und Vorteile der Erfindung

Aufgabe der vorliegenden Erfindung ist es, ein verbessertes Befestigungselement für den Möbelbau bereitzustellen insbesondere im Hinblick auf ein funktionsrichtiges Bereitstellen des Befestigungselements für eine Vormontage und die anschließende fehlerfreie Verstellung zum Einrichten der Befestigungsfunktion.

Diese Aufgabe wird durch die unabhängigen Ansprüche gelöst.

Die abhängigen Ansprüche betreffen vorteilhafte und zweckmäßige Weiterbildungen der Erfindung.

Die Erfindung geht aus von einem Befestigungselement für den Möbelbau, insbesondere von einem Möbel-Befestigungselement, mit einem Halteteil, das für eine Befestigungsfunktion in ein vertieftes Aufnahmevolumen einbringbar und anschließend in eine Haltestellung des Befestigungselements durch ein Aufweiten eines Halteabschnitts am Halteteil verstellbar ist, und mit einem auf das Halteteil derart abgestimmten Stellteil, dass mit einer linearen Relativbewegung zwischen dem Halteteil und dem am Halteteil funktionsrichtig angebrachten Stellteil die Haltestellung einrichtbar ist, wobei das Stellteil in der Haltestellung am Halteteil verbleibt.

Der Kern der Erfindung liegt darin, dass am Stellteil über eine Außenkontur des Stellteils vorstehende Anschlagmittel vorhanden sind, wobei die Anschlagmittel eine Einsteckposition des Stellteils am Halteteil bestimmen, in welcher das funktionsrichtig am Halteteil angebrachte Stellteil am Halteteil eingesteckt ist und das Stellteil und das Halteteil aneinander gehalten sind, wobei in der Einsteckposition der Halteabschnitt nicht verstellt ist.

Bei dem zunächst aus den zwei getrennten Teilen bzw. aus dem Halte- und dem Stellteil bestehenden Befestigungselement wird in einem ersten Schritt das Stellteil funktionsrichtig am Halteteil angebracht z. B. angesteckt, so dass es selbsttätig am Halteteil gehalten ist. Die eine Befestigungsfunktion bewirkende Haltestellung ist dabei nicht erreicht. In dem so vorbereiteten Zustand kann das Befestigungselement an beliebigen Einsatzorten zum Beispiel angebracht bzw. vormontiert werden.

Das Stell- und das Halteteil können dabei reibschlüssig oder anderweitig aneinander gehalten sein. In der durch die lineare Relativbewegung eingerichteten Haltestellung des Befestigungselements ist dieses in dem Aufnahmevolumen durch den aufgeweiteten Halteabschnitt festgeklemmt. Die Verstellung des Halteabschnitts durch das lineare Einziehen oder Eindrücken des Stellteils erfolgt insbesondere durch eine Aufweitung nach außen beziehungsweise eine Spreizung des Halteabschnitts am Halteteil. Der Halteabschnitt wird dabei zwangsweise an außen benachbarten Wandungen des vertieften Aufnahmevolumens zum Beispiel eines Sacklochs in einem Holzmaterial angepresst.

Die lineare Relativbewegung zur Erreichung der Haltestellung mit dem Stellteil erfolgt vorteilhaft in der Einsteckrichtung, in welcher das Stellteil an das Halteteil heranführbar ist, um positionsrichtig daran gehalten zu werden.

Die Anschlagmittel stehen über eine Hüllfläche des Stellteils nach außen über und können damit beim Anstecken des Stellteils am Halteteil sicher wirksam werden.

Ein weiterer wesentlicher Aspekt der Erfindung liegt darin, dass eine Verdrehsicherung vorgesehen ist, mit welcher bei am Halteteil funktionsrichtig angebrachtem Stellteil eine Drehbewegung zwischen dem Stellteil und dem Halteteil um eine Längsachse des Befestigungselements unterbunden ist. Damit wird die lineare Relativbewegung von Stellteil und Halteteil zum Erreichen der Haltestellung nicht durch ein Verdrehen der beiden Teile beeinträchtigt. Die Verdrehsicherung ist insbesondere von Bedeutung, wenn mittels einer Schraube, welche in Längsrichtung des Befestigungselements in das Stellteil einbringbar ist, das am Halteteil positionsrichtig angesteckt ist, durch das Eindrehen der Schraube die Relativbewegung von Stell- und Halteteil realisiert ist. Dabei ist die Schraube nur verdrehbar, in Längsrichtung aber fixiert. Auch das Halteteil muss bei diesem Vorgehen gegen ein Verdrehen gegenüber angrenzenden Abschnitten drehgesichert sein.

Mit der Verdrehsicherung bleibt der Steckzustand von Stell-und Halteteil zudem verbessert erhalten, da keine Relativbewegung von Stell- und Halteteil durch Verdrehen stattfinden kann, was ansonsten zu einem Lockern oder Lösen des angesteckten Stellteils vom Halteteil bewirken könnte.

Weiter wird vorgeschlagen, dass gemäß einer vorteilhaften Variante der Erfindung die Verdrehsicherung Führungsabschnitte umfasst, welche zur Führung der linearen Relativbewegung zwischen dem Halteteil und dem Stellteil beitragen und welche zur Verstellung des Halteabschnitts durch ein Aufweiten des Halteabschnitts wirksam sind. Damit kann mit der Verdrehsicherung eine zusätzliche Funktion platzsparend bereitgestellt werden. Insbesondere können zusammenwirkende Abschnitte am Stellteil und am Halteteil bereitgestellt werden, welche umfänglich zur Längsachse des Befestigungselements betrachtet einen Anschlag und einen Gegenanschlag bilden und so das Verdrehen unterbinden, die sich zugewandten Abschnitte aber in Längsrichtung aneinander gegenseitig führend vorbeigleiten können, was bei der linearen Relativbewegung zwischen Stell- und Halteteil stattfindet.

Mit der Verdrehsicherung kann zudem eingerichtet sein, dass das Stellteil am Halteteil ausschließlich in der funktionsrichtigen Ausrichtung der beiden Teile zueinander ansteckbar ist.

Ein Einbringabschnitt ist am Stellteil vorhanden, der mit der funktionsrichtigen Anbringung des Stellteils am Halteteil in eine Aufnahme am Halteteil eingreift, wobei die Anschlagmittel wenigstens ein Anschlagelement umfassen, welches an einem Gegenabschnitt in Anlage kommt, ohne dass eine Verstellung des Halteabschnitts erfolgt. Der Einbringabschnitt am Stellteil und die Aufnahme am Halteteil sind so aufeinander und auf das Anschlagelement abgestimmt, dass das Stellteil so weit in das Halteteil einsteckbar ist, dass in der Anschlagstellung des Anschlagelements am Gegenabschnitt das Stellteil und das Halteteil aneinander gehalten sind, ohne dass der Halteabschnitt eine Verstellung erfährt.

Der Einbringabschnitt z. B. außen am Stellteil ist in Einschiebrichtung insbesondere aufweitend beziehungsweise leicht konisch aufweitend ausgebildet, wie auch in entsprechender Form der dazugehörige Gegenabschnitt bzw. die Aufnahme am Halteteil.

Insbesondere ist das wenigstens eine Anschlagelement derart bereitgestellt, dass ausgehend von einem am Halteteil funktionsrichtig angebrachten Stellteil über die Anschlagmittel ein Widerstand gegen eine weitere lineare Relativbewegung zwischen dem Stellteil und dem Halteteil in Ansteckrichtung zum Einrichten der Haltestellung bereitgestellt ist. Eine Person kann beim Anstecken des Stellteils am Halteteil feststellen, dass der gewünschte Ansteckzustand des Stellteils am Halteteil erreicht ist. Das Stellteil ist dann in seiner richtigen Einstecktiefe in der Aufnahme aufgenommen. Bis zum Erreichen dieser Einstecktiefe gleitet das Stellteil bzw. dessen Einbringabschnitt ohne Widerstand in dem Halteteil bzw. dessen Aufnahme.

Das wenigstens eine Anschlagelement ist am Stellteil nach außen vorstehend ausgebildet. Beispielsweise kann das Anschlagelement stiftförmig bzw. vergleichsweise schmal und länglich ausgebildet sein.

Eine vorteilhafte Modifikation des Erfindungsgegenstandes sieht vor, dass genau zwei vorstehende Anschlagelemente am Stellteil vorhanden sind. Insbesondere sind die beiden Anschlagelemente bezogen auf eine Längsachse des Stellteils vorteilhaft gegenüberliegend nach außen vorstehend. Als Gegenabschnitt am Halteteil kann eine endseitige Stirnfläche dienen. Die Stirnfläche kann beispielsweise umschließend um die vertiefte Aufnahme am Halteteil ausgebildet sein.

Die Anschlagelemente sind insbesondere gleichartig ausgebildet. Grundsätzlich können auch mehr als zwei Anschlagelemente vorhanden sein.

Es wird weiterhin vorgeschlagen, dass vorteilhafterweise der Gegenabschnitt und das wenigstens eine Anschlagelement derart aufeinander abgestimmt sind, dass ausgehend von der Einsteckposition bei der linearen Relativbewegung von Stellteil und Halteteil zum Einrichten der Haltestellung sich das wenigstens ein Anschlagelement aus der vorstehenden Stellung wegbewegt. Damit ist ausgehend vom Ansteckzustand von Stell- und Halteteil die weitergehende lineare Relativbewegung erst möglich. Mit zum Beispiel einem weitern Eindrücken des Stellteils in das Halteteil wird mit dem Wegbewegen des Anschlagelements der Widerstand durch das Anschlagelement in der Anschlagposition gegen eine Relativbewegung von Stellteil und Halteteil in Ansteckrichtung aufgehoben. Das Anschlagelement ist am Befestigungselement so vorhanden, dass es bei Überschreiten einer auf das Anschlagelement wirkenden Eindrückkraft das Anschlagelement beispielsweise gelenkig ausweicht bzw. umgebogen wird.

Weiter ist es vorteilhaft, dass das wenigstens eine Anschlagelement derart am Befestigungselement vorhanden ist, dass das wenigstens eine Anschlagelement im Zusammenwirken mit dem Gegenabschnitt bei der Relativbewegung von Stellteil und Halteteil zum Einrichten der Haltestellung auslenkbar und/oder zumindest teilweise abscherbar ist. Das Verbiegen und Abscheren kann auch überlagert möglich sein beziehungsweise zunächst ein Verbiegen und dann zumindest ein teilweises Abscheren erfolgen. Auch ein vollständiges Abscheren des Anschlagelements ist möglich.

Weiter ist es vorteilhaft, dass ein auf das wenigstens eine Anschlagelement abgestimmter Hohlraum am Befestigungselement derart ausgebildet ist, dass das wenigstens eine Anschlagelement in den Hohlraum eintaucht, wenn die Relativbewegung zwischen dem Halteteil und dem am Halteteil funktionsrichtig angebrachten Stellteil zum Einrichten der Haltestellung erfolgt. Der Hohlraum ist insbesondere an dem Teil vorhanden, an welchem das wenigstens eine Anschlagelement ausgebildet ist. Bevorzugt sind zwei Anschlagelemente am Stellteil vorhanden, wobei jedem Anschlagelement ein Hohlraum bzw. ein vertieft ausgebildeter Bereich zugeordnet ist. Der Hohlraum ist bezogen zu einer Einschieberichtung des Stellteils nachlaufend zum Anschlagelement bzw. benachbart zu der Stelle, an welcher das Anschlagelement absteht. So kann das Anschlagelement um diese Stelle umgebogen bzw. abgeschert und selbsttätig mit der Relativbewegung von Stell- und Halteteil in den Hohlraum eingedrückt werden.

Weiter ist es vom Vorteil, dass an dem Halteteil und dem Stellteil miteinander zusammenwirkende Führungsabschnitte derart vorhanden sind, dass mit den Führungsabschnitten die lineare Relativbewegung zwischen dem Halteteil und dem Stellteil für die Verstellung des Halteabschnitts geführt vorgebbar ist. Insbesondere wird über die Führungsabschnitte, zum Beispiel in Richtung der Relativbewegung schräg ausgerichtete Flächen am Stellteil und Gegenflächen am Halteteil, eine Kraftwirkung in Richtung quer dazu bzw. nach außen bereitgestellt, so dass über eine Keilwirkung mit der Bewegung an diesen Schrägflächen der Halteabschnitt nach außen aufgeweitet bzw. gespreizt wird. Die Führungsabschnitte umfassen vorteilhaft eine kegelförmige bzw. rund-konische Außenseite am Stellteil bzw. an dessen Einbringabschnitt und am Halteteil eine an der konischen Außenseite bei der Relativbewegung in Anlage gelangende Innenseite an der Aufnahme des Halteteils, wobei die Neigung bzw. räumliche Ausrichtung der Außenseite und der Innenseite aufeinander abgestimmt sind. Die Aufnahme kann dabei zum Beispiel zwei Abschnitte bzw. Segmente aufweisen, welche elastisch nach außen aufweiten können. Vorteilhafterweise ist der Halteabschnitt durch diese Abschnitte gebildet, wobei außen eine gerippte Struktur ausgebildet sein kann, wodurch die Anpress- und Einhakwirkung des Halteabschnitts gegen Wandungen des Aufnahmevolumens verbessert ist.

Außerdem können die Führungsabschnitte an der Verdrehsicherung vorhanden sein, wobei die Führungsabschnitte zur Verdrehsicherung und zur Aufweitung des Halteabschnitts beitragen.

Auch sind vorteilhafterweise Begrenzungsmittel für eine Begrenzung der Relativbewegung von Stell- und Halteteil bzw. zur Begrenzung einer Einstecktiefe von Stellteil und Halteteil vorhanden. Damit wird auch ein maximal mögliches Aufweiten bzw. Spreizen des Halteabschnitts begrenzt vorgegeben.

Es ist über dies vorteilhaft, dass die Führungsabschnitte räumlich zueinander abgewinkelt ausgerichtete Führungsflächen umfassen, welche zur Führung der Relativbewegung zwischen dem Stellteil und dem Halteteil und/oder zur Verstellung des Halteabschnitts durch ein Aufweiten des Halteabschnitts dienen.

Es ist überdies von Vorteil, dass der Einbringabschnitt am Stellteil mit Führungsabschnitten versehen ist. Damit wird mit dem Einbringabschnitt eine Halte-, Positionier- und Verstellfunktion bereitgestellt.

Die Erfindung betrifft außerdem einen Fronthaken für ein Möbelfrontteil, das mit einem Möbelseitenteil über dem am Möbelfrontteil festlegbaren Fronthaken verbindbar ist, wobei zur Festlegung des Fronthakens am Möbelfrontteil ein Befestigungselement zum Festlegen des Fronthakens am Möbelfrontteil gemäß einer der vorgenannten Ausbildungen vorhanden ist. Insbesondere greifen vorstehende Zapfen am Halteteil in vorbereitete Öffnungen am Fronthaken ein, um eine drehfeste Anbringung des Befestigungselements am Fronthaken zu erreichen.

Außerdem erstreckt sich die Erfindung auf ein Möbel mit Möbelkomponenten, wobei Befestigungsmittel für den Zusammenbau der Möbelkomponenten vorgesehen sind, wobei die Befestigungsmittel ein Befestigungselement nach einem der oben erläuterten Ausbildungen umfassen.

### Figurenbeschreibung:

Weitere Merkmale und Vorteile der Erfindung sind anhand von in den Figuren dargestellten erfindungsgemäßen Ausführungsbeispielen näher erläutert. Im Einzelnen zeigt:
- Figur 1: ein erfindungsgemäßes Befestigungselement von der Seite mit einem Stellteil und einem Halteteil,
- Figur 2: das Befestigungselement gemäß Figur 1 im aneinander angesteckten Zustand von Stellteil und Halteteil,
- Figur 3: das Befestigungselement gemäß Figur 1 und 2 im Haltezustand,
- Figur 4: einen Fronthaken einer Schublade mit zwei daran aufgenommenen Befestigungselementen gemäß der Figuren 1 bis 3,
- Figur 5: eine vergrößerte Detaildarstellung gemäß des Bereichs A aus Figur 4,
- Figur 6: der Fronthaken gemäß Figur 4 mit den daran angebrachten Befestigungselementen in der Haltestellung und
- Figur 7: ein vergrößertes Detail gemäß des Bereichs B aus Figur 6 mit einem Befestigungselement in der Haltestellung.

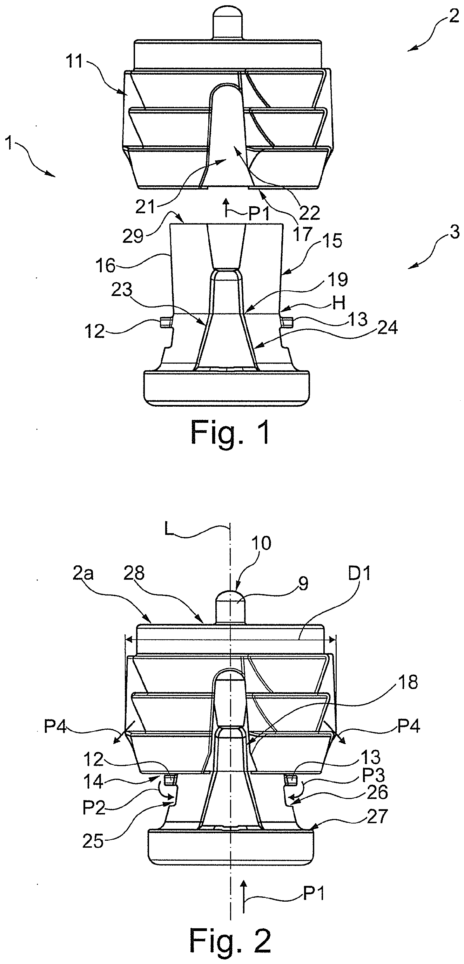

Ein als Spreizdübel 1 aus einem Kunststoff ausgebildetes erfindungsgemäßes Befestigungselement weist ein Halteteil 2 und ein dazu passendes Stellteil 3 auf. Gemäß Figur 1 sind das Halteteil 2 und das Stellteil 3 voneinander beabstandet, wobei das Halteteil 2 und das Stellteil 3 zueinander positionsrichtig ausgerichtet sind, so dass durch ein Zusammenführen des Halteteils 2 und des Stellteils 3, beispielsweise indem das Stellteil 3 gemäß Richtung Pfeil P1 zum Halteteil 2 hinbewegt wird, die beiden Teile 2 und 3 zusammensteckbar sind.

Figur 2 zeigt den zusammengesteckten Zustand von Halteteil 2 und Stellteil 3, wobei das Stellteil 3 am Halteteil 2 funktionsrichtig angebracht ist.

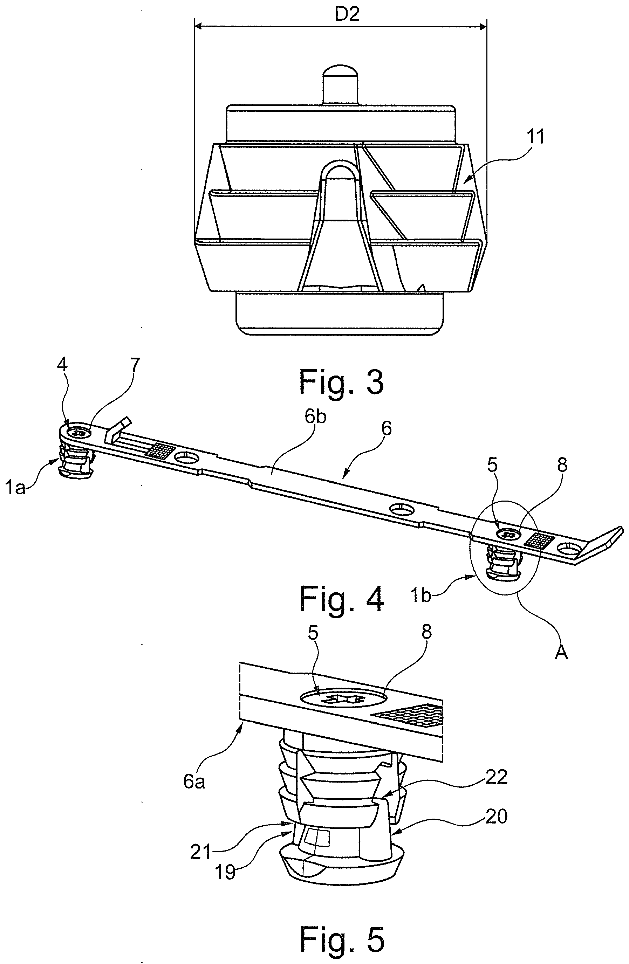

Figur 3 zeigt den Spreizdübel 1 in einer Haltestellung des Spreizdübels 1, in welcher das Halteteil 2 in einer entsprechenden insbesondere zylindrisch ausgeformten Öffnung beziehungsweise einem vorbereiteten Aufnahmevolumen (nicht gezeigt) beispielsweise in einem Möbelteilbereich geklemmt gehalten ist.

Zum Einrichten bzw. Erreichen der Haltestellung des Spreizdübels 1 gemäß Figur 3 ist eine lineare Relativbewegung von Halteteil 2 und Stellteil 3 entlang der Längsachse L des Spreizdübels 1 notwendig. Dies kann zum Beispiel bei feststehendem Halteteil 2 durch ein Eindrücken des Stellteils 3 aus der in Figur 2 gezeigten Ansteckstellung in Richtung P1 sein.

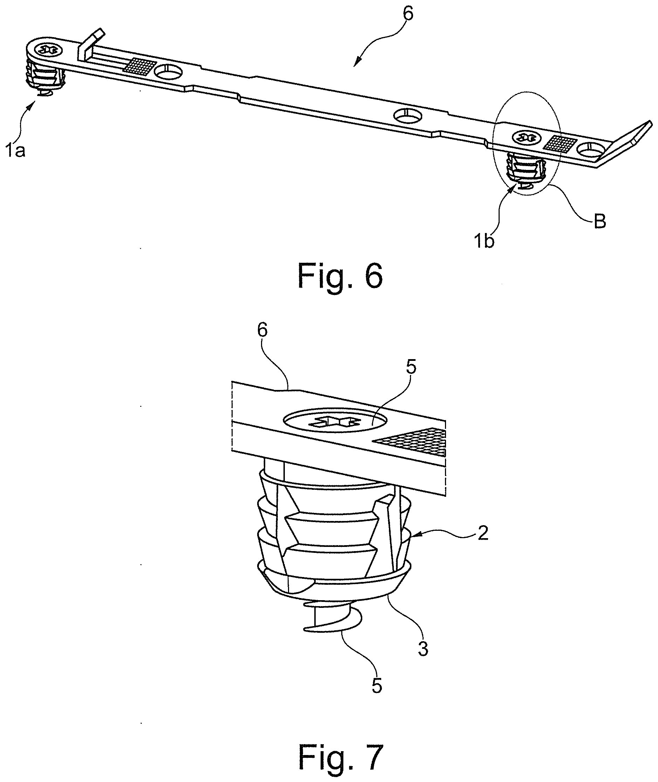

Das elastische Aufweiten bzw. Aufspreizen eines Halteabschnitts 11 mit drei umfänglich verlaufenden gezackten Rippen am Halteteil 2 ist in Figur 2 durch Pfeile P4 angedeutet. In der Haltestellung gemäß Figur 3 ist erkennbar, dass der Halteabschnitt 11 nach außen bzw. von der Längsachse L des Spreizdübels 1 wegversetzt sind. Dabei wird ein maßgeblicher Außendurchmesser des Halteabschnitts 11 von D1 im nicht aufgeweiteten Zustand gemäß Figur 2 bzw. Figur 5 auf D2 im aufgeweiteten Haltezustand gemäß Figur 3 bzw. Figur 7 verändert. Dabei können sich der Halteabschnitt 11 außen an Wandungen eines Aufnahmevolumens anpressend abstützen und den Spreizdübel 1 in dem betreffenden Bauteil verklemmen.

Im Einsteckzustand gemäß Figur 2 gelangen zwei am Stellteil 3 vorhandene Anschlagelemente 12 und 13 in Anlage am Halteteil 2. Die Anschlagelemente 12, 13 sind über die Länge des Stellteils 3 in etwa mittig und nach außen abstehend als stiftförmig ausgebildete Abschnitte am Stellteil 3 vorhanden. Die Anschlagelemente 12, 13 reichen nach außen über eine Hüllfläche H des Stellteils 3 über. Dabei kommen die Anschlagelemente 12, 13 in der Einsteckposition gemäß Figur 2 an einem Stirnabschnitt 14 am Halteteil 2 in Anlage.

Im Einsteckzustand bildet die eine Durchgangsöffnung 29 des Stellteils 3 umschließende Außenwandung 16 an einem kegelstumpfförmigen Einsteckabschnitt 15 des Stellteils 3 eine form- bzw. reibschlüssige Verbindung mit dem Halteteil 2. Hierfür weist das Halteteil 2 eine Aufnahme 17 mit einer eine durchgehende Öffnung 28 am Halteteil 2 begrenzende Wandung auf. Beim weiteren Einschieben des Einsteckabschnitts 15 in die Aufnahme 17 vom in Figur 2 dargestellten Einsteckzustand in den Haltezustand gemäß Figur 3 drückt die Außenwandung 16 den Halteabschnitt 11 zwangsweise nach außen.

Am Spreizdübel 1 ist außerdem eine Verdrehsicherung 18 vorgesehen, um ein Verdrehen zwischen dem Halteteil 2 und dem Stellteil 3 im aneinander angesteckten Zustand gemäß Figur 2 beziehungsweise im Haltezustand gemäß Figur 3 zu verhindern. Die Verdrehsicherung 18 umfasst zwei seitlich außen am Stellteil 3 überstehenden gegenüberliegende rippenartige Führungskegel 19, 20 die sich mit ihrem vorne abgerundeten Endabschnitt bis in den Einsteckabschnitt 15 erstrecken. Die Führungskegel 19, 20 sind abgestimmt, in Schlitze 21, 22 im Halteabschnitt 11 einzugreifen, wobei die Schlitze 21, 22 durch eine quer durch das Halteteil 2 reichende Aussparung gebildet sind.

Jeder Führungskegel 19, 20 weist zur Längsachse L schräggestellte gegen die Einsteckrichtung P1 sich aufweitende Flanken 23 und 24 auf, welche beim Einschieben des Stellteils 3 in das Halteteil 2 an Schlitzwandungen des jeweils dazugehörigen Schlitzes 21 bzw. 22 in Anlage kommen und ebenfalls wesentlich zum Aufweiten des Halteabschnitts 11 beitragen.

Damit wirken zwei voneinander getrennt ausgebildete Mechanismen zum Aufweiten des Halteabschnitts 11, einerseits durch das Zusammenspiel der Außenwandung 16 mit der Wandung der Öffnung 28 und andererseits durch das Zusammenwirken der Flanken 23, 24 mit Schlitzwandungen des jeweils dazugehörigen Schlitzes 21 bzw. 22.

Beim Erreichen der Haltestellung gemäß Figur 3 werden die Anschlagelemente 12, 13 gemäß der Bewegungspfeile P2 und P3 (siehe Figur 2) umgebogen bzw. zumindest teilweise abgeschert, wobei die Anschlagelemente 12 und 13 in jeweils einen zugeordneten Hohlraum 25 bzw. 26 eintauchen. Die Hohlräume 25, 26 sind benachbart zu den Anschlagelementen 12 und 13 am Stellteil 3 abgestimmt auf die Anschlagelemente 12 und 13 ausgebildet vorhanden. Damit stellen die umgebogenen beziehungsweise abgescherten Anschlagelemente 12 und 13 kein Hindernis zum Erreichen der Haltestellung gemäß Figur 3 mehr bereit. Denn die abgescherten beziehungsweise umgebogenen Anschlagelemente 12 und 13 können komplett in den Hohlräumen 25 und 26 Platz finden, sodass die Haltestellung gemäß Figur 3 problemlos ohne ein Verklemmen der Anschlagelemente 12 und 13 zwischen dem Stellteil 3 und dem Halteteil 2 eingerichtet wird.

In der Haltestellung gemäß Figur 3 sind die Führungskegel 19, 20 vollständig in den Schlitzen 21, 22 aufgenommen, sodass ein ringförmiger Anschlagbereich 27 am Stellteil 3 an dem Stirnabschnitt 14 des Halteteils 2 anliegt.

In den Figuren 4 bis 7 ist ein Fronthaken 6 mit zwei zum Spreizdübel 1 baugleichen Spreizdübeln 1a und 1b gezeigt. Dabei wird alternativ zum Eindrücken ein Heranziehen des Stellteils 3 zum Halteteil 2 mit einer Schraube 4 bzw. 5 realisiert. Die jeweilige Schraube 4 bzw. 5 wird dabei zentrisch in die Öffnung 28 in einer Stirnseite 2a des Halteteils 2 eingebracht bis ein Außengewinde der Schraube 4 bzw. 5 in die zentrische Durchgangsöffnung 29 im Stellteil 3 eingreift bzw. sich darin einschneidet. Durch weiteres Eindrehen der Schraube 4 bzw. 5 wird dann bei am Fronthaken 6 über zwei Einsteckzapfen 9 und 10 arretiert eingesteckten Halteteil 2 das Stellteil 3 an das Halteteil 2 herangezogen und dabei in die aufgespreizte Haltestellung gebracht.

Die beiden Spreizdübel 1a und 1b dienen demgemäß zur Anbringung des Fronthakens 6 an einem Möbelteil, wobei am Möbelteil vorbereitete Rundlöcher zur Aufnahme der beiden rückseitig an einer Rückseite 6a am Fronthaken 6 abstehenden Spreizdübel 1a, 1b vorhanden sind, in welchen sich die Spreizdübel 1a, 1b mit dem Erreichen der Haltestellung festhaken.

Am aus einem flachen Metallstreifen gebildeten Fronthaken 6 sind zum Anbringen der beiden Spreizdübel 1a, 1b zwei Rundlöcher 7 und 8 vorbereitet vorhanden und rückseitig zusätzlich daneben je zwei in den Figuren nicht ersichtliche Vertiefungen, in welche die beiden Einsteckzapfen 9, 10 passgenau eingreifen.

Zunächst werden die Spreizdübel 1a, 1b in der zusammengesteckten Anordnung gemäß Figur 2 an der Rückseite 6a des Fronthakens 6 angesteckt, wobei die beiden an der Stirnseite 2a gegenüberliegenden Einsteckzapfen 9, 10 in die vorbereitet vorhandenen Vertiefungen eingreifen und die Spreizdübel 1a, 1b so verdrehsicher am Fronthaken 6 festhalten. Im nächsten Schritt werden von einer Vorderseite 6b des Fronthakens 6 die Schrauben 4 und 5 in die beiden Spreizdübel 1a, 1b bzw. in die Durchgangsöffnung 29 am Stellteil 3 eingeschraubt, so dass die Anordnung gemäß Figur 5 eingerichtet ist. Der Halteabschnitt 11 am Spreizdübel 1 befindet sich dabei in ihrer Ausgangsstellung beziehungsweise in seiner nicht aufgeweiteten beziehungsweise nicht gespreizten Ausrichtung gemäß Figur 2.

Anschließend wir der Fronthaken 6 mit den daran vorbereitet vorhandenen Spreizdübeln 1a, 1b an dem Möbelteilabschnitt in den entsprechend vorbereiteten Öffnungen angesteckt, wobei in die Aufnahmevolumina der jeweilige an der Rückseite 6a des Fronthakens 6 überstehende Teil des Spreizdübels 1a und 1b hineinreicht.

Anschließend werden die Schrauben 4 und 5 durch ein Verdrehwerkzeug wie z. B. ein Kreuzschlitzschraubendreher verdreht und das Stellteil 3 relativ zum Halteteil 2 gemäß Einsteckrichtung P1 herangezogen, sodass die gemäß Figur 6 bzw. 7 erreichte Haltestellung der Spreizdübel 1a und 1b eingerichtet ist.

### Bezugszeichenliste:

- 1: Spreizdübel
- 1a: Spreizdübel
- 1b: Spreizdübel
- 2: Halteteil
- 2a: Stirnseite
- 3: Stellteil
- 4: Schraube
- 5: Schraube
- 6: Fronthaken
- 6a: Rückseite
- 6b: Vorderseite
- 7: Rundloch
- 8: Rundloch
- 9: Einsteckzapfen
- 10: Einsteckzapfen
- 11: Halteabschnitt
- 12: Anschlagelement
- 13: Anschlagelement
- 14: Stirnabschnitt
- 15: Einsteckabschnitt
- 16: Außenwandung
- 17: Aufnahme
- 18: Verdrehsicherung
- 19: Führungskegel
- 20: Führungskegel
- 21: Schlitz
- 22: Schlitz
- 23: Flanken
- 24: Flanken
- 25: Hohlraum
- 26: Hohlraum
- 27: Anschlagbereich
- 28: Öffnung
- 29: Durchgangsöffnung

## Patentansprüche

1. Befestigungselement (1) für den Möbelbau, insbesondere Möbel-Befestigungselement, mit einem Halteteil (2), das für eine Befestigungsfunktion in ein vertieftes Aufnahmevolumen einbringbar und anschließend in eine Haltestellung des Befestigungselements (1) durch ein Aufweiten eines Halteabschnitts (11) am Halteteil (2) verstellbar ist, und mit einem auf das Halteteil (2) derart abgestimmten Stellteil (3), dass mit einer linearen Relativbewegung zwischen dem Halteteil (2) und dem am Halteteil (2) funktionsrichtig angebrachten Stellteil (3) die Haltestellung einrichtbar ist, wobei das Stellteil (3) in der Haltestellung am Halteteil (2) verbleibt, wobei
am Stellteil (3) über eine Außenkontur des Stellteils (3) vorstehende Anschlagmittel vorhanden sind, mit wenigstens einem Anschlagelement (12, 13), das am Stellteil (3) nach außen vorstehend ausgebildet ist, welches an einem Gegenabschnitt (14) in Anlage kommt, wobei die Anschlagmittel eine Einsteckposition des Stellteils (3) am Halteteil (2) bestimmen, in welcher das funktionsrichtig am Halteteil (2) angebrachte Stellteil (3) am Halteteil (2) eingesteckt ist und das Stellteil (3) und das Halteteil (2) aneinander gehalten sind, **dadurch gekennzeichnet, dass** in der Einsteckposition der Halteabschnitt (11) nicht verstellt ist und die Anschlagelemente (12, 13) ein Hindernis zum Erreichen der Haltestellung darstellen.

2. Befestigungselement nach Anspruch 1, **dadurch gekennzeichnet dass** eine Verdrehsicherung (18) vorgesehen ist, mit welcher bei am Halteteil (2) funktionsrichtig angebrachtem Stellteil (3) eine Drehbewegung zwischen dem Stellteil (3) und dem Halteteil (2) um eine Längsachse des Befestigungselement (1) unterbunden ist.

3. Befestigungselement nach Anspruch 2, **dadurch gekennzeichnet, dass** die Verdrehsicherung (18) Führungsabschnitte (23, 24) umfasst, welche zur Führung der linearen Relativbewegung zwischen dem Halteteil (2) und dem Stellteil (3) beitragen und welche zur Verstellung des Halteabschnitts (11) durch ein Aufweiten des Halteabschnitts (11) wirksam sind.

4. Befestigungselement nach einem der vorhergehenden Ansprüche, **dadurch gekennzeichnet, dass** genau zwei vorstehende Anschlagelemente (12, 13) am Stellteil (3) vorhanden sind.

5. Befestigungselement nach einem der vorhergehenden Ansprüche 1 bis 3, **dadurch gekennzeichnet, dass** der Gegenabschnitt (14) und das wenigstens eine Anschlagelement (12, 13) derart aufeinander abgestimmt sind, dass ausgehend von der Einsteckposition bei der linearen Relativbewegung von Stellteil (3) und Halteteil (2) zum Einrichten der Haltestellung sich das wenigstens eine Anschlagelement (12, 13) aus der vorstehenden Stellung wegbewegt.

6. Befestigungselement nach einem der vorhergehenden Ansprüche 1 bis 3 und 5, **dadurch gekennzeichnet, dass** das wenigstens eine Anschlagelement (12, 13) derart am Befestigungselement (1) vorhanden ist, dass das wenigstens eine Anschlagelement (12, 13) im Zusammenwirken mit dem Gegenabschnitt (14) bei der Relativbewegung von Stellteil (3) und Halteteil (2) zum Einrichten der Haltestellung auslenkbar und/oder zumindest teilweise abscherbar ist.

7. Befestigungselement nach einem der vorhergehenden Ansprüche 1 bis 3, 5 und 6, **dadurch gekennzeichnet, dass** ein auf das wenigstens eine Anschlagelement (12, 13) abgestimmter Hohlraum (25, 26) am Befestigungselement (1) derart ausgebildet ist, dass das wenigstens eine Anschlagelement (12, 13) in den Hohlraum (25, 26) eintaucht, wenn die Relativbewegung zwischen dem Halteteil (2) und dem am Halteteil (2) funktionsrichtig angebrachten Stellteil (3) zum Einrichten der Haltestellung erfolgt.

8. Befestigungselement nach einem der vorhergehenden Ansprüche, **dadurch gekennzeichnet, dass** an dem Halteteil (2) und dem Stellteil (3) miteinander zusammenwirkende Führungsabschnitte derart vorhanden sind, dass mit den Führungsabschnitten die lineare Relativbewegung zwischen dem Halteteil (2) und dem Stellteil (3) für die Verstellung des Halteabschnitts (11) geführt vorgebbar ist.

9. Befestigungselement nach Anspruch 8, **dadurch gekennzeichnet, dass** die Führungsabschnitte räumlich zueinander abgewinkelt ausgerichtete Führungsflächen umfassen, welche zur Führung der Relativbewegung zwischen dem Stellteil (3) und dem Halteteil (2) und/oder zur Verstellung des Halteabschnitts (11) durch ein Aufweiten des Halteabschnitts (11) dienen.

10. Befestigungselement nach einem der vorhergehenden Ansprüche, **dadurch gekennzeichnet, dass** der Einbringabschnitt (15) am Stellteil (3) mit Führungsabschnitten versehen ist.

11. Fronthaken (6) für ein Möbelfrontteil, das mit einem Möbelseitenteil über den am Möbelfrontteil festlegbaren Fronthaken (6) verbindbar ist, **dadurch gekennzeichnet, dass** zur Festlegung des Fronthakens (6) am Möbelfrontteil ein Befestigungselement (1) zum Festlegen des Fronthakens (6) am Möbelfrontteil nach einem der vorhergehenden Ansprüche vorhanden ist.

12. Möbel mit Möbelkomponenten, wobei Befestigungsmittel für den Zusammenbau der Möbelkomponenten vorgesehen sind, **dadurch gekennzeichnet, dass** die Befestigungsmittel ein Befestigungselement (1) nach einem der Ansprüche 1 bis 10 umfassen.

## Claims

1. Fitting element (1) for furniture production, in particular furniture fitting element, with a holding part (2), which can be inserted into a recessed receiving volume for a fitting function, and is subsequently adjustable in a holding position of the fitting element (1) by widening a holding section (11) on the holding part (2), and with an adjustment part (3) matched to the holding part (2) in such a way that the holding position can be set with a linear relative movement between the holding part (2) and the adjustment part (3) functionally affixed to the holding part (2), wherein the adjustment part (3) remains in the holding position on the holding part (2), wherein projecting abutment means are provided on the adjustment part (3) across an outer contour of the adjustment part (3), with at least one abutment element (12, 13), formed to project outwardly from adjustment part (3), which abuts against a counter section (14), wherein the abutment means determine an insertion position of the adjustment part (3) on the holding part (2), in which the adjustment part (3) is inserted into the holding part (2) functionally correct on said holding part (2), and the adjustment part (3) and the holding part (2) are held against each other, **characterised in that** the holding section (11) is not displaced in the insertion position and the abutment elements (12, 13) represent an obstacle for reaching the holding position.

2. Fitting element according to claim 1, **characterised in that** an anti-turn device (18) is envisaged, with which a rotation movement between the adjustment part (3) and the holding part (2) around a longitudinal axis of the fitting element (1) is prevented if the adjustment part (3) is affixed to the holding part (3) in a functionally correct way.

3. Fitting element according to claim 2, **characterised in that** the anti-turn device (18) comprises guide sections (23, 24), which contribute towards guiding the linear relative movement between the holding part (2) and the adjustment part (3), and which act to adjust the holding section (11) by widening the holding section (11).

4. Fitting element according to one of the preceding claims, **characterised in that** exactly two projecting abutment elements (12, 13) are provided on the adjustment part (3).

5. Fitting element according to one of the preceding claims 1 to 3, **characterised in that** the counter section (14) and the at least one abutment element (12, 13) are matched to each other in such a way that the at least one abutment element (12, 13) moves out of the projecting position from the insertion position during the linear relative movement of adjustment part (3) and holding part (2) for setting up the holding position.

6. Fitting element according to one of the preceding claims 1 to 3 and 5, **characterised in that** the at least one abutment element (12, 13) is provided on the fitting element (1) in such a way that the at least one abutment element (12, 13) is deflectable and/or can be at least partially sheared off in cooperation with the counter section (14) during the relative movement of adjustment part (3) and holding part (2) for setting up the holding position.

7. Fitting element according to one of the preceding claims 1 to 3, 5 and 6, **characterised in that** a hollow space (25, 26) matched to the at least one abutment element (12, 13) is formed on the fitting element (1) in such a way that the at least one abutment element (12, 13) is immersed in the hollow space (25, 26) when the relative movement between the holding part (2) and the adjustment part (3) fitted functionally correct on the holding part (2) for setting up the holding position takes place.

8. Fitting element according to one of the preceding claims, **characterised in that** guide sections that cooperate with each other in such a way that the linear relative movement between the holding part (2) and the adjustment part (3) for adjusting the holding section (11) can be predetermined in a guided way with the guiding sections provided on the holding part (2) and the adjustment part (3).

9. Fitting element according to claim 8, **characterised in that** the guiding sections comprise guide surfaces aligned in relation to each other in a spatially angled way, which serve for guiding the relative movement between the adjustment part (3) and the holding part (2) and/or for adjusting the holding section (11) by widening the holding section (11).

10. Fitting element according to one of the preceding claims, **characterised in that** the insertion section (15) on the adjustment part (3) is equipped with guide sections.

11. Front hook (6) for a front furniture part, which can be connected with a side furniture part via the front hook (6) that can be fixed to the front furniture part, **characterised in that** a fitting element (1) for fixing the front hook (6) is provided on the front furniture part according to one of the preceding claims.

12. Furniture with furniture components, wherein fitting means for assembling the furniture components are envisaged, **characterised in that** the fitting means comprise a fitting element (1) according to one of the claims 1 to 2.

## Revendications

1. Élément de fixation (1) pour la construction de meubles, en particulier élément de fixation de meuble, comprenant une partie de retenue (2) qui, pour une fonction de fixation, peut être introduite dans un volume de logement creux puis peut être ajustée dans une position de retenue de l'élément de fixation (1) par un élargissement d'une section de retenue (11) de la partie de retenue (2), et un organe de réglage (3) adapté à la partie de retenue (2) de telle sorte que la position de retenue peut être établie au moyen d'un mouvement relatif linéaire entre la partie de retenue (2) et l'organe de réglage (3) monté correctement sur la partie de retenue (2), l'organe de réglage (3), dans la position de retenue, restant sur la partie de retenue (2), des moyens de butée qui saillent du contour extérieur de l'organe de réglage (3) étant prévus sur l'organe de réglage (3), avec au moins un élément de butée (12, 13) conçu saillant vers l'extérieur sur l'organe de réglage (3) et venant en butée contre une section complémentaire (14), les moyens de butée définissant une position d'enfichage de l'organe de réglage (3) sur la partie de retenue (2), position dans laquelle l'organe de réglage (3) monté correctement sur la partie de retenue (2) est enfiché sur la partie de retenue (2) et l'organe de réglage (3) et la partie de retenue (2) sont retenus l'un sur l'autre, **caractérisé en ce que**, dans la position d'enfichage, la section de retenue (11) n'est pas ajustée et les éléments de butée (12, 13) constituent un obstacle empêchant d'atteindre la position de retenue.

2. Élément de fixation selon la revendication 1, **caractérisé en ce qu'**il est prévu une protection anti-rotation (18) empêchant, lorsque l'organe de réglage (3) est monté correctement sur la partie de retenue (2), un mouvement de rotation entre l'organe de réglage (3) et la partie de retenue (2) autour d'un axe longitudinal de l'élément de fixation (1).

3. Élément de fixation selon la revendication 2, **caractérisé en ce que** la protection anti-rotation (18) comprend des sections de guidage (23, 24), lesquelles contribuent au guidage du mouvement relatif linéaire entre la partie de retenue (2) et l'organe de réglage (3), et lesquelles ont pour effet d'ajuster la section de retenue (11) par un élargissement de la section de retenue (11).

4. Élément de fixation selon l'une des revendications précédentes, **caractérisé en ce qu**'exactement deux éléments de butée (12, 13) saillant sont présents sur l'organe de réglage (3).

5. Élément de fixation selon l'une des revendications précédentes 1 à 3, **caractérisé en ce que** la section complémentaire (14) et le au moins un éléments de butée (12, 13) sont adaptés l'un à l'autre de telle manière que, partant de la position d'enfichage, lors du mouvement relatif linéaire de l'organe de réglage (3) et de la partie de retenue (2) pour établir la position de retenue, le au moins un élément de butée (12, 13) s'écarte de la position en saillie.

6. Élément de fixation selon l'une des revendications précédentes 1 à 3 et 5, **caractérisé en ce que** le au moins un élément de butée (12, 13) est présent sur l'élément de fixation (1) de telle manière que le au moins un élément de butée (12, 13), en coopération avec la section complémentaire (14) lors du mouvement relatif de l'organe de réglage (3) et de la partie de retenue (2) pour l'établissement de la position de retenue, peut être dévié et/ou au moins en partie cisaillé.

7. Élément de fixation selon l'une des revendications précédentes 1 à 3, 5 et 6, **caractérisé en ce qu**'une cavité (25, 26) adaptée à l'au moins un élément de butée (12, 13) est ménagée sur l'élément de fixation (1) de telle manière que le au moins un élément de butée (12, 13) s'enfonce dans la cavité (25, 26) lorsque le mouvement relatif entre la partie de retenue (2) et l'organe de réglage (3) monté correctement sur la partie de retenue (2) est réalisé pour l'établissement de la position de retenue.

8. Élément de fixation selon l'une des revendications précédentes, **caractérisé en ce que** des sections de guidage sont présentes sur la partie de retenue (2) et l'organe de réglage (3) et coopèrent les unes avec les autres de telle manière qu'avec les sections de guidage, le mouvement relatif linéaire entre la partie de retenue (2) et l'organe de réglage (3) peut être prédéfini de manière guidée pour l'ajustement de la section de retenue (11).

9. Élément de fixation selon la revendication 8, **caractérisé en ce que** les sections de guidage comprennent des surfaces de guidage orientées en faisant dans l'espace un angle les unes par rapport aux autres, lesquelles surfaces servent à guider le mouvement relatif entre l'organe de réglage (3) et la partie de retenue (2) et/ou à ajuster la section de retenue (11) par un élargissement de la section de retenue (11).

10. Élément de fixation selon l'une des revendications précédentes, **caractérisé en ce que** la section d'introduction (15) sur l'organe de réglage (3) est pourvue de sections de guidage.

11. Crochet de façade (6) pour une façade de meuble qui peut être reliée à une partie latérale de meuble au moyen des crochets de façade (6) pouvant être fixés sur la façade de meuble, **caractérisé en ce que** pour fixer le crochet de façade (6) sur la façade de meuble, un élément de fixation (1) destiné à fixer le crochet de façade (6) sur la façade de meuble selon l'une des revendications précédentes est présent.

12. Meuble comprenant des composants de meuble, des moyens de fixation pour l'assemblage des composants de meuble étant prévus, **caractérisé en ce que** les moyens de fixation comprennent un élément de fixation (1) selon l'une des revendications 1 à 2.
